# EUROPEAN PATENT SPECIFICATION

(11) **EP 4 347 861 B1**
(45) Date of publication and mention of the grant of the patent: **26.11.2025**
(21) Application number: 22812362.6
(22) Date of filing: 19.05.2022
(51) Int. Cl.: C12Q 1/04, G01N 21/77, G01N 21/78, G01N 31/22

(54) **PERACETIC ACID TEST STRIPS**
PERESSIGSÄURETESTSTREIFEN
BANDELETTES RÉACTIVES POUR ACIDE PERACÉTIQUE

(30) Priority: 27.05.2021 US 202163193640 P
(43) Date of publication of application: 10.04.2024
(73) Proprietor: Medivators Inc., Minneapolis, MN 55447 (US)
(72) Inventor: BUI, Huyen, Minneapolis, Minnesota 55447 (US); MURPHY, Kristopher, Minneapolis, Minnesota 55447 (US); WANG, Dong, Minneapolis, Minnesota 55447 (US)
(74) Representative: FRKelly
(86) International application number: PCT/US2022/072425
(87) International publication number: WO 2022/251794

(56) References cited:
- WO-A1-99/30152
- US-A- 4 278 439
- US-A- 4 670 402
- US-A1- 2020 049 630

## Description

### CROSS REFERENCE TO RELATED APPLICATIONS

This application claims priority to and the benefit of U.S. Provisional Application with serial number 63/193,640, filed on May 27, 2021, entitled PERACETIC ACID TEST STRIPS.

### FIELD OF THE INVENTION

The invention relates generally to test strips to determine peracetic acid concentration in a solution.

### BACKGROUND OF THE INVENTION

Medical devices, such as endoscopes, designed to come into contact with the body of a patient during treatment and or diagnosis require, before being re-used on a new patient, to be "reprocessed", so that the device can be used without concern for patient safety, infection and death resulting from remaining body fluid(s), body waste(s), virus(es) and or bacteria.

Such a sanitation treatment can be a simple disinfection or a sterilization process, performed at either hot or cold temperatures depending on the construction materials of the device. Various cleaning solutions can be used to accomplish the sanitation.

Due to potentially harmful consequences of improper endoscope reprocessing, it is necessary to determine whether the decontamination procedures ensure that endoscopes are reprocessed properly. A method is required that informs the endoscope user that the medical devices were processed and whether the appropriate conditions for sterilization or high-level disinfection were achieved. That is, there is a concern that the concentration of the sterilization agent(s) in the cleaning solution may not be sufficient to disinfect and sterilize the device. Therefore, it is not possible to determine whether the cleaning solution concentration of sterilization agent(s) is adequate to accomplish the necessary level of disinfection/sterilization required.

Therefore, a need exists that overcomes one or more of the current disadvantages noted above.

### BRIEF SUMMARY OF THE INVENTION

The present invention surprisingly provides an easy and efficient indicator test and method to determine the concentration of peracetic acid in a treatment solution. A test strip is provided with a chemical indicator composition that is designed to inform the use that the concentration of peracetic acid is sufficient to disinfect and/or sterilize a medical device, such as an endoscope. US patent US2020/049630A1 discloses a method and an indicator composition for determining the concentration of a percarboxylic acid in a test sample. Alternatively, the test strip can also inform the user when the concentration of the peracetic acid is not sufficient to disinfect and/or sterilize a medical device. The chemical indicator composition is designed to provide assurance that the concentration of the peracetic acid solution being used to disinfect and sterilize the device has a minimum required concentration of greater than 2000 ppm of peracetic acid.

In one aspect, the test strip with the chemical indicator composition provides a 100% pass rate at a minimum concentration of 2300 ppm peracetic acid is present.

In another aspect, the test strip with the chemical indicator composition provides a 0% pass rate at a minimum concentration of 2000 ppm peracetic acid or less.

In yet another aspect, the chemical indicator composition that is applied to and then dried on the test strip substrate is unique. The chemical indicator composition, prior to application and drying on the test strip substrate, includes about 3.4 weight percent of a starch with an amylose concentration of about 20 to 30 %, about 0.8 weight percent of a dibasic phosphate agent, about 0.41 weight percent of a monobasic phosphate agent, about 0.28 to about 0.92 weight percent of an iodide, about 7.13 weight percent glycerol, from about 0.29 to about 0.68 weight percent mercapto benzimide sulfonate, with the remainder of about 86.58 to about 90.19 weight percent water.

While multiple embodiments are disclosed, still other embodiments of the present invention will become apparent to those skilled in the art from the following detailed description. Accordingly, the detailed descriptions are to be regarded as illustrative in nature and not restrictive.

### BRIEF DESCRIPTION OF THE DRAWINGS

Figure 1 provides pass Rates of Formula 16 (EWR6165-1) immediate contact dip followed by 10 second reading time.
Figure 2 provides pass rates of Formula 16 (EWR6165-1) immediate contact dip followed by 20 second reading time.
Figure 3 provides average pass rates of formula 16 (EWR6165-1) immediate contact dip followed by 10 or 20 second reading time.
Figure 4 is a reference card standard showing passing coupons and coupons which failed.

### DETAILED DESCRIPTION

In the specification and in the claims, the terms "including" and "comprising" are open-ended terms and should be interpreted to mean "including, but not limited to. . . . " These terms encompass the more restrictive terms "consisting essentially of" and "consisting of."

It must be noted that as used herein and in the appended claims, the singular forms "a", "an", and "the" include plural reference unless the context clearly dictates otherwise. As well, the terms "a" (or "an"), "one or more" and "at least one" can be used interchangeably herein. It is also to be noted that the terms "comprising", "including", "characterized by" and "having" can be used interchangeably.

It is known that the reuse of endoscopes in hospitals can lead to potentially life-threatening infections in patients and that the proper reprocessing, i.e., high-level disinfection, more specifically, sterilization, of endoscopes is of paramount importance for patient safety.

Peracetic acid ("PAA") solution, is a clear, colorless liquid that can be prepared by combining aqueous hydrogen peroxide and acetic acid. It is a high-level disinfectant ("HLD"), used for endoscope reprocessing in automated endoscope reprocessing ("AER") machines. PAA has been found to be environmentally acceptable and has low toxicity.

Values expressed in a range format should be interpreted in a flexible manner to include not only the numerical values explicitly recited as the limits of the range, but also to include all the individual numerical values or sub-ranges encompassed within that range as if each numerical value and sub-range is explicitly recited. For example, a range of "about 0.1% to about 5%" should be interpreted to include not only the explicitly recited amount of about 0.1 wt. % to about 5 wt. %, but also the individual concentrations (e.g., 1%, 2%, 3%, and 4%) and the sub-ranges (e.g., 0.5%, 1.1%, 2.2%, 3.3%, and 4.4%) within the indicated range.

When describing the present invention, the following terms have the following meanings, unless otherwise indicated.

The term "about" can allow for a degree of variability in a value or range, for example, within 10%, within 5%, or within 1% of a stated value or of a stated limit of a range.

As used herein, "cleaner" refers to a substance capable of effectively cleaning a substrate (e.g., medical device). The substance can effectively remove foreign or extraneous matter from the substrate.

As used herein, "solubilizer" refers to a substance that makes soluble, aids in the solubility, or otherwise increases the solubility, of a substance in a liquid diluent or carrier. In specific embodiments of the invention, the solubilizer can include propylene glycol.

As used herein, "diluent" or "carrier" refers to a liquid medium in which substances are suspended, completely dissolved, or partially dissolved in. In specific embodiments of the invention, the diluent can include water (e.g., DI water).

As used herein, "pH" refers to the measure of the acidity or basicity of an aqueous solution. Solutions with a pH less than 7 are said to be acidic and solutions with a pH greater than 7 are basic or alkaline. Pure water has a pH very close to 7. The pH scale is traceable to a set of standard solutions whose pH is established by international agreement. Primary pH standard values are determined using a concentration cell with transference, by measuring the potential difference between a hydrogen electrode and a standard electrode such as the silver chloride electrode. Measurement of pH for aqueous solutions can be done, e.g., with a glass electrode and a pH meter, or using indicators. Mathematically, pH is the negative logarithm of the activity of the (solvated) hydronium ion, more often expressed as the measure of the hydronium ion concentration

As used herein, "purified water" refers to water that is mechanically filtered or processed to be cleaned for consumption. Distilled water and deionized (DI) water have been the most common forms of purified water, but water can also be purified by other processes including reverse osmosis, carbon filtration, microfiltration, ultrafiltration, ultraviolet oxidation, or electrodialysis

As used herein, "deionized water" or "DI water" refers to demineralized water/DM water (DI water, DIW or de-ionized water), which is water that has had almost all of its mineral ions removed, such as cations like sodium, calcium, iron, and copper, and anions such as chloride and sulfate. Deionization is a chemical process that uses specially manufactured ionexchange resins which exchange hydrogen ion and hydroxide ion for dissolved minerals, which then recombine to form water. Because most non-particulate water impurities are dissolved salts, deionization produces a high purity water that is generally similar to distilled water, and this process is quick and without scale buildup. However, deionization does not significantly remove uncharged organic molecules, viruses or bacteria, except by incidental trapping in the resin. Specially made strong base anion resins can remove Gram-negative bacteria. Deionization can be done continuously and inexpensively using electrodeionization

As used herein, "reversed osmosis water" refers to purified water obtained using a semipermeable membrane. This membrane technology is not properly a filtration method. In reverse osmosis, an applied pressure is used to overcome osmotic pressure, a colligative property, that is driven by chemical potential, a thermodynamic parameter. Reverse osmosis can remove many types of molecules and ions from solutions, and is used in both industrial processes and the production of potable water. The result is that the solute is retained on the pressurized side of the membrane and the pure solvent is allowed to pass to the other side. To be "selective," this membrane should not allow large molecules or ions through the pores (holes), but should allow smaller components of the solution (such as the solvent) to pass freely.

As used herein, "tap water" or "running water," "city water," or "municipal water" refers to water supplied to a tap (valve). Its uses include drinking, washing, cooking, and the flushing of toilets. Indoor tap water is distributed through "indoor plumbing", which has existed since antiquity but was available to very few people until the second half of the 19th century, when it began to propagate in what are now the developed countries. It became common in many regions during the 20th century, and is now lacking only among the poor, especially in developing countries. Calling a water supply "tap water" distinguishes it from the other main types of fresh water which may be available; these include water from rainwater-collecting cisterns, water from village pumps or town pumps, or water carried from streams, rivers, or lakes (whose potability may vary).

As used herein, "medical device" refers to an instrument, apparatus, implant, in vitro reagent, or similar or related article that is used to diagnose, prevent, or treat disease or other conditions, and does not achieve its purposes through chemical action within or on the body (which would make it a drug). Whereas medicinal products (also called pharmaceuticals) achieve their principal action by pharmacological, metabolic or immunological means, medical devices act by other means like physical, mechanical, or thermal means. Medical devices vary greatly in complexity and application. Examples range from simple devices such as tongue depressors, medical thermometers, and disposable gloves to advanced devices such as computers which assist in the conduct of medical testing, implants, and prostheses. The design of medical devices constitutes a major segment of the field of biomedical engineering. In specific embodiments, the medical device can include an endoscope (e.g., flexible endoscope).

As used herein, "endoscope" refers to an instrument used to examine the interior of a hollow organ or cavity of the body. Unlike most other medical imaging devices, endoscopes are inserted directly into the organ. Endoscope can also refer to using a borescope in technical situations where direct line of-sight observation is not feasible.

An endoscope can consist of: (a) a rigid or flexible tube; (b) a light delivery system to illuminate the organ or object under inspection. The light source is normally outside the body and the light is typically directed via an optical fiber system; (c) a lens system transmitting the image from the objective lens to the viewer, typically a relay lens system in the case of rigid endoscopes or a bundle of fiber optics in the case of a fiberscope; (d) an eyepiece. Modern instruments may be video scopes, with no eyepiece, a camera transmits image to a screen for image capture; and (e) an additional channel to allow entry of medical instruments or manipulators.

As used herein, "flexible endoscope" refers to an endoscope that includes a flexible tube.

As used herein, "flexible endoscope washer disinfector device" or "washer disinfector device" refers to an apparatus or machine employed to wash a medical device, such as a flexible endoscope or colonoscope. Such an apparatus or machine can also disinfect the medical device, as well as optionally dry and optionally store the medical device. Suitable apparatus or machines that can wash and disinfect the medical device include, e.g., Medivators Advantage Plus^{™} Automated Endoscope Reprocessor (AER), Medivators Advantage Plus^{™} Pass-Thru AER, Medivators Scope Buddy^{™} Endoscope Flushing Aid, Medivators Scope Buddy^{™} Plus Endoscope Flushing Aid, Olympus OER-PRO^{®} AER, Getinge ED-Flow AER, Getinge ED900 AER, Steris SYSTEM 1^{®} and SYSTEM 1E^{®} Endo Liquid Chemical Sterilant Processing System.

As used herein, "clean," "cleaning," "wash," or "washing" refers to the process of freeing a substrate from foreign or extraneous matter; the process of removing foreign or extraneous matter from a substrate (e.g., medical device).

As used herein, "disinfect" or "disinfecting" refers to the process of destroying, removing, killing and/or inhibiting the action of microorganisms located on a substrate (e.g., medical device).

As used herein, "dry" or "drying" refers to the process of removing moisture from a substrate (e.g., medical device). The process can be carried out, e.g., employing heat (elevated temperature).

As used herein, "store" or "storing" refers to the process of housing a substrate (e.g., medical device) for future use.

The embodiments described herein relate to methods for conditioning medical equipment following processing (cleaning and disinfection) of said equipment, and to apparatus' for use in such methods. In particular, embodiments relate to methods and apparatus' for conditioning flexible medical endoscopes, following processing of said endoscope to a state of high level disinfection.

The term "disinfection" is used herein in preference to the term "sterility" since the latter implies the complete absence of pathogenic organisms, which in practice is rarely, if ever, achievable. It is to be appreciated however that the ultimate aim of disinfecting medical equipment is indeed to get as close to absolute sterility as is practicable. The term "conditioning" is used herein to refer to a method of maintaining the disinfection of medical equipment following processing thereof to a state of high level disinfection.

The present embodiments have been developed in connection with the processing and storage of flexible medical endoscopes, and therefore will be described herein with particular emphasis on this application. It is envisaged however, that the methods described herein may be applied to the processing and storage of substantially all types of medical, surgical, dental and veterinary equipment, apparatus, and instruments, especially those with lumens.

After use in an endoscopic procedure, flexible medical endoscopes are usually subjected to "processing", consisting of rigorous manual cleaning followed by placing the endoscope in an Automated Endoscope Re-processor (AER) which effects a further cleaning and disinfecting procedure to bring the endoscope to a High Level Disinfection Status (HLDS). The endoscope is then stored in a clean environment. Under normal storage conditions, the degree of disinfection of the endoscope can only be maintained at an acceptable level for a relatively short period, usually about 3 hours. This is due to the multiplication of residual pathogens which may remain on the endoscope after disinfection, or which may be present in the atmosphere. If the endoscope is not used in a further endoscopic procedure within this time, then further processing will be necessary prior to its next use. Frequent and repeated processing is undesirable, since it reduces the availability of the endoscope for endoscopic procedures, while increasing the operating costs, due to the need for cleaning and disinfectant materials and the operation of cleaning equipment. Furthermore, repeated processing reduces the lifetime of the endoscope due to wear and tear.

The loss of HLDS over the 3 hour storage period is due to the inability of the AER completely to dry the internal channels of the endoscope, due to the small internal diameter of these channels. The residual moisture within the channels provides an environment in which micro-organisms can quickly multiply.

The term "cleaning composition" refers to a substance that when applied to non-living objects, effectively removes foreign matter located on the objects. For example, when used to clean medical devices, such as flexible endoscopes, the cleaning solution(s) described herein can effectively remove from the medical device at least one of soil, blood, protein, carbohydrate, bodily fluid, and fecal matter.

The term "room temperature" as used herein refers to a temperature of about 15°C to 28°C.

The term "hydrogen peroxide" or "H₂O₂" refers to the compound chemically designated as dihydrogen dioxide, having the CAS Reg. No. 7722-84-1. In specific embodiments, the hydrogen peroxide includes water. In further specific embodiments, the hydrogen peroxide is 50% wt. % hydrogen peroxide in water. The hydrogen peroxide can be present in the composition, in any suitable and effective amount.

The term "organic acid" refers to an organic compound with acidic properties. The most common organic acids are the carboxylic acids, whose acidity is associated with their carboxyl group --COOH. Sulfonic acids, containing the group --SO₂OH, are relatively stronger acids. The relative stability of the conjugate base of the acid determines its acidity. Other groups can also confer acidity, usually weakly: --OH, --SH, the enol group, and the phenol group. Organic compounds containing these groups are generally referred to as organic acids. An example of an organic acid is acetic acid.

The term "acetic acid" or "ethanoic acid" refers to an organic compound with the chemical formula CH₃CO₂H (also written as CH₃COOH), having the CAS Reg. No. 64-19-7.

The term "glacial acetic acid" refers to undiluted and relatively concentrated, water-free (anhydrous) acetic acid.

The term "peracetic acid," "peroxyacetic acid," or "PAA" refers to an organic compound with the chemical formula CH₃CO₃H.

The term "chelator," "chelant" or "chelating agent" refers to a compound that forms soluble, complex molecules with certain metal ions, inactivating the metal ions (or to some extent, countering the effects of the metal ions), so that they cannot normally react with other compounds, elements or ions. In specific embodiments, the chelator effectively chelates transition metals. One suitable type of chelator is/are sulfonic acids, more particularly, polymers or solid supports which contain sulfonic acid functionality. In specific embodiments, the chelator will effectively chelate any transition metals and/or alkaline earth metals present in any of the components of the composition.

In particular, the chelator can be a sulfonic acid group that is incorporated into a polymer. For example, the polymer can be styrene based that is functionalized with sulfonic acid groups. The styrenic polymer can be a copolymer, such as styrene/divinylbenzene. The polymer may further be crosslinked. Examples of commercially available sulfonic acid functionalized polymers include those such as Dowex^{®} 50WX4-200, Dowex^{®} DR2030, Amberlite IR120 Na, Amberlite IRN99, Amberlyst 15 hydrogen (CAS Number 39389-20-3) and Amberlite strong acidic cation exchange sodium form available from Dow Chemical Company, which are styrenedivinylbenzene copolymers.

Alternatively, a copolymer of tetrafluoroethylene (TFE) and Sulfonyl Fluoride Vinyl Ether (SFVE) F₂C=CF-O-CF₂CF₂-SO₂F is a useful material. Aquivion^{®} PFSA (perfluorosulfonic acid) ionomers, available from Solvay, are based on this copolymer and are available in a membrane, as a powder, in a dispersion or as pellets.

In one aspect, the perfluorosulfonic acid pellets can be extruded/coextruded with other polymers to form films or shaped into a container to hold the remaining components of the embodiments. Suitable extrusion polymers include, for example, polyethylenes and polypropylenes.

In another embodiment, the polymer can be derived from 2-acrylamido-2-methylpropane sulfonic acid (AMPS). Additionally, AMPS can be used to coat the lining of a container and then be polymerized to the surface of the container as a protective/chelating coating.

It should be understood that the requisite sulfonic acid group may need to be first treated with an acidic solution to provide the free acid as necessary.

The polymeric resin chelator can be added to the compositions described herein. Alternatively, the compositions can be passed through the polymeric resin chelator. In another embodiment, the polymeric resin chelator can be in the form of a membrane and the membrane is in contact and remains in contact with the composition. In still another embodiment, the polymeric resin chelator is incorporated into a container which hold the compositions described herein. In certain embodiments, the polymer resin chelator is coated onto the interior of a container that is used to store the compositions described herein. In still another embodiment, the polymeric chelator can be placed within a "mesh pouch" or other containment system that can be placed into a container with the compositions described herein.

One advantage of utilizing the polymeric resin chelator is that users of the compositions often contaminate the composition in between uses. That is, an individual may place a used wipe, sponge, or rag, medical device, instrument, etc. against or within the container that houses the composition, thus transferring contaminants to the container. The polymeric resin chelators described herein help to stabilize the peracetic acid/hydrogen peroxide compositions by complexing with/removing the undesired contaminants, such as metal ions.

It should be understood that one advantage of the polymeric resin chelator is that it does not dissolve in the embodiments described herein. That is, the polymer resin remains in the solution but does not become homogeneous with the remaining components. Not to be limited by theory, it is believed that the polymeric resin chelator provides surface contact with the components of the composition and removes metallic contaminants from the solution to stabilize the composition. As a result, the components of the composition, e.g., the hydrogen peroxide and/or the peracetic acid, do not degrade over time due to metallic components. Additionally, the polymeric resin chelator does not cause a residue to remain on a treated surface after the surface has been treated with the compositions described herein.

The term "anticorrosive agent" or "corrosion inhibitor" refers to a compound that, when added to a liquid or gas, decreases the corrosion rate of a material, typically a metal or an alloy. Suitable anticorrosive agents include, e.g., benzotriazole and sodium dodecyl sulfate (SDS).

The term "benzotriazole" or "BTA" refers to the compound 1H-benzotriazole or 1,2,3-benzotriazole, having the CAS Reg. No. 95-14-7.

The term "surfactant" refers to a compound capable of lowering the surface tension of a liquid, the interfacial tension between two liquids, or that between a liquid and a solid. Surfactants may act as detergents, wetting agents, emulsifiers, foaming agents, and/or dispersants. The surfactant can be non-ionic, anionic or cationic. Additionally, the surfactant can include one or more non-ionic surfactants, one or more anionic surfactants, and/or one or more cationic surfactants.

The term "non-ionic surfactant" or "nonionic surfactant" refers to a surfactant, in which the total number of electrons is equal to the total number of protons, giving it a net neutral or zero electrical charge. One suitable class of non-ionic surfactants includes the Pluronic^{®} poloxamers.

Poloxamers are nonionic triblock copolymers composed of a central hydrophobic chain of polyoxypropylene (poly(propylene oxide)) flanked by two hydrophilic chains of polyoxyethylene (poly(ethylene oxide)). Poloxamers are also known by the trade name Pluronics^{®}.

Because the lengths of the polymer blocks can be customized, many different poloxamers exist, that have slightly different properties. For the generic term "poloxamer," these copolymers are commonly named with the letter "P" (for poloxamer) followed by three digits, the first two digits "x" (times) 100 give the approximate molecular mass of the polyoxypropylene core, and the last digit x 10 gives the percentage polyoxyethylene content (e.g., P407=Poloxamer with a polyoxypropylene molecular mass of 4,000 g/mol and a 70% polyoxyethylene content). For the Pluronic^{®} tradename, coding of these copolymers starts with a letter to define its physical form at room temperature (L=liquid, P=paste, F=flake (solid)) followed by two or three digits. The first digit (two digits in a three-digit number) in the numerical designation, multiplied by 300, indicates the approximate molecular weight of the hydrophobe; and the last digit x 10 gives the percentage polyoxyethylene content (e.g., L61=Pluronic with a polyoxypropylene molecular mass of 1,800 g/mol and a 10% polyoxyethylene content). In the example given, poloxamer 181 (P181)=Pluronic L61.

The term "Pluronic^{®} 10R5 surfactant block copolymer" refers to polyoxypropylene-polyoxyethylene block copolymer, having the CAS Reg. No. 9003-11-6.

Other nonionic surfactants include, but are not limited to, fatty alcohols, polyoxyethylene glycol alkyl ethers (Brij), polyoxypropylene glycol alkyl ethers, glucoside alkyl ethers, polyoxyethylene glycol octylphenol ethers, polyoxyethylene glycol alkylphenol ethers, glycerol alkyl esters, polyoxyethylene glycol sorbitan alkyl esters, sorbitan alkyl esters, cocamide MEAs, cocamide DEAs, dodecyl dimethylamine oxides, block copolymers of polyethylene glycol and polypropylene glycols.

Suitable fatty alcohols include, but are not limited to, cetyl alcohol, stearyl alcohol, cetostearyl alcohol (consisting predominantly of cetyl and stearyl alcohols) and oleyl alcohol.

Suitable polyoxyethylene glycol alkyl ethers, include but are not limited to (Brij), for example CH₃-(CH₂)₁₀₋₁₆-(O-C₂H₄)₁₋₂₅-OH, or octaethylene glycol monododecyl ether or pentaethylene glycol monododecyl ether.

Suitable polyoxypropylene glycol alkyl ethers include CH₃-(CH₂)₁₀₋₁₆-(O-C₃H₆)₁₋₂₅-OH.

Suitable glucoside alkyl ethers include CH₃-(CH₂)₁₀₋₁₆-(O-Glucoside)₁₋₃-OH, and, for example, include decyl glucoside, lauryl glucoside, and octyl glucoside.

Suitable polyoxyethylene glycol octylphenol ethers include C₈H₁₇-(C₆H₄)-(O-C₂H₄)₁₋₂₅-OH. One exemplary material is TRITON X-100.

Suitable polyoxyethylene glycol alkylphenol ethers include C₉H₁₉-(C₆H₄)-(O-C₂H₄)₁₋₂₅-OH. One example is Nonoxynol-9.

In one aspect, a suitable glycerol alkyl ester is glyceryl laurate.

In another aspect, a suitable polyoxyethylene glycol sorbitan alkyl ester is polysorbate.

In still another aspect, suitable sorbitan alkyl esters are referred to as SPAN, e.g., SPAN-20, sorbitan monolaurate.

The term "cationic surfactant" refers to a surfactant, in which the total number of electrons is less than the total number of protons. giving it a net positive electrical charge.

One kind of cationic surfactant is typically based on pH-dependent primary, secondary or tertiary amines. The primary amines become positively charged at a pH < 10, and the secondary amines become charged at a pH < 4. One example is octenidine dihydrochloride.

Another type of cationic surfactant is based on permanently charged quaternary ammonium cations, such as alkyltrimethylammonium salts. These include but are not limited to cetyl trimethylammonium bromide (CTAB), hexadecyl trimethyl ammonium bromide, cetyl trimethylammonium chloride (CTAC), cetylpyridinium chloride (CPC), polyethoxylated tallow amine (POEA), benzalkonium chloride (BAC), benzethonium chloride (BZT), 5-Bromo-5-nitro-1,3-dioxane, dimethyldioctadecylammonium chloride and dioctadecyldimethylammonium bromide (DODAB).

The term "anionic surfactant" refers to a surfactant in which the total number of electrons is greater than the total number of protons, giving it a net negative electrical charge. One suitable anionic surfactant is sodium lauryl sulfate.

Anionic surfactants have a permanent anion, such as a sulfate, sulfonate or phosphate anion associated with the surfactant or has a pH-dependent anion, for example, a carboxylate.

Sulfates can be alkyl sulfate or alkyl ether sulfates.

Suitable alkyl sulfates include, but are not limited to, ammonium lauryl sulfate or sodium lauryl sulfate (SDS). Suitable alkyl ether sulfates include, but are not limited to, sodium laureth sulfate, also known as sodium lauryl ether sulfate (SLES) or sodium myreth sulfate.

Suitable sulfonates include, but are not limited to, docusate (dioctyl sodium sulfosuccinate), fluorosurfactants that are sulfonated and alkyl benzene sulfonates.

Typical sulfonated fluorosurfactants include, but are not limited to, perfluorooctanesulfonate (PFOS) or perfluorobutanesulfonate.

Phosphates are typically alkyl aryl ether phosphates or alkyl ether phosphates.

Carboxylates are typically alkyl carboxylates, such as fatty acid salts (soaps), such as for example, sodium stearate. Alternatively, the carboxylate can be, but is not limited to, sodium lauryl sarcosinate. In another alternative aspect, the carboxylate includes but is not limited to a carboxylated fluorosurfactant, such as perfluorononanoate, or perfluorooctanoate (PFOA or PFO).

When a single surfactant molecule exhibits both anionic and cationic dissociations it is called amphoteric or zwitterionic. Zwitterionic (amphoteric) surfactant is based on primary, secondary or tertiary amines or quaternary ammonium cation also having a sulfonate, carboxylate or a phosphate.

Suitable zwitterionic surfactants include, but are not limited to, CHAPS (3-[(3-Cholamidopropyl)dimethylammonio]-1-propanesulfonate) or a sultaine. The sultaine is typically cocamidopropyl hydroxysultaine.

In one aspect, the carboxylate cation is an amino acid, imino acid or betaine. In one aspect, the betaine is typically cocamidopropyl betaine.

When the zwitterionic surfactant includes a phosphate, lecithin is often chosen as the counterion.

The term "sodium dodecyl sulfate," "SDS," "NaDS," "sodium lauryl sulfate," or "SLS" refers to an organic compound with the formula CH₃(CH₂)₁₁OSO₃Na), having the CAS Reg. No. 151-21-3.

The term "disinfectant" refers to a substance that when applied to non-living objects, destroys microorganisms that are living on the objects. The term "disinfect" refers to the process of destruction or prevention of biological contaminants. Disinfection does not necessarily kill all microorganisms, especially nonresistant bacterial spores; it is less effective than sterilization, which is an extreme physical and/or chemical process that kills all types of life.

Disinfectants are different from other antimicrobial agents such as antibiotics, which destroy microorganisms within the body, and antiseptics, which destroy microorganisms on living tissue. Disinfectants are also different from biocides. The latter are intended to destroy all forms of life, not just microorganisms. Sanitizers are substances that simultaneously clean and disinfect.

The term "CFU" refers colony forming units and is a measure of viable cells in which a colony represents an aggregate of cells derived from a single progenitor cell.

In various embodiments, the cleaning composition includes: (a) hydrogen peroxide; (b) an organic acid; (c) a chelator that is not Dequest^{®} 2010 (1-hydroxyethylidene-1,1,-diphosphonic acid), in particular a sulfonic acid containing polymer, copolymer or a support functionalized with sulfonic acid groups ; and (d) surfactant.

It should be understood that certain embodiments disclosed herein do not include 1-hydroxyethylidene-1,1,-diphosphonic acid. In embodiments disclosed herein, the compositions and methods do not leave a residue on a treated surface after use of the composition to treat the surface.

In another aspect, (1-hydroxyethylidene-1,1,-diphosphonic acid) can be included in the cleaning composition.

It is appreciated that those of ordinary skill in the art fully understand and appreciate that when a composition includes more than one component, the composition may also include additional components formed as a product of the reaction between the components in the composition. For example, those of skill in the art fully understand and appreciate that a composition including hydrogen peroxide (H₂O₂) and acetic acid (CH₃CO₂H) also includes the oxidized product of acetic acid, peracetic acid (CH₃CO₃H). As such, reference to the composition including hydrogen peroxide (H₂O₂) and acetic acid (CH₃CO₂H) is proper, as well as reference to the composition being formed from hydrogen peroxide (H₂O₂) and acetic acid (CH₃CO₂H). To that end, a composition of acetic acid and hydrogen peroxide will include significant and appreciable amounts of peracetic acid formed from the reaction of acetic acid with hydrogen peroxide. Further, it is appreciated that those of ordinary skill in the art fully understand and appreciate that an equilibrium exists between hydrogen peroxide and acetic acid, and peracetic acid.

In various embodiments, peracetic acid is present in about 1 wt. % to about 15 wt. % of the composition. In some embodiments, peracetic acid is present in about 2-14 wt. %, 3-12 wt. %, 4-11 wt. %, 5-9 wt. %, about 6-8 wt. %, or about 1 wt. %, 2 wt. %, 3 wt. %, 4 wt. %, 5 wt. %, 6 wt. %, 7 wt. %, 8 wt. %, 9 wt. %, 10 wt. %, 11 wt. %, 12 wt. %, 13 wt. %, 14 wt. %, or about 15 wt. % or more of the composition. In some embodiments, peracetic acid is present in about 5 wt. % to about 7.5 wt. % of the composition.

In various embodiments, hydrogen peroxide is present in about 10 wt. % to about 50 wt. % of the composition. In some embodiments (e.g., before equilibration and formation of PAA), the hydrogen peroxide is present in about 15-45 wt. %, 20-35 wt. %, or about 25-30 wt. % of the composition. In some embodiments (e.g., after equilibration and formation of PAA), the hydrogen peroxide is present in about 10-40 wt. %, 15-35 wt. %, 18-30 wt. % or about 20-26 wt. % of the composition. In some embodiments, the hydrogen peroxide is present in about 16 wt. %, 18 wt. %, 20 wt. %, 21 wt. %, 22 wt. %, 23 wt. %, 24 wt. %, 25 wt. %, 26 wt. %, 27 wt. %, 28 wt. %, 29 wt. %, 30 wt. %, 31 wt. %, 32 wt. %, 34 wt. %, or about 36 wt. %. In some embodiments, the hydrogen peroxide is about 35 wt. % in water, present in about 18 wt. % to about 32 wt. % of the composition. In some embodiments, hydrogen peroxide is about 35 wt. % in water, present in about 28 wt. % of the composition. In some embodiments, hydrogen peroxide is about 35 wt. % in water, present in about 20 wt. % to about 26 wt. % of the composition.

In various embodiments, the organic acid includes acetic acid. In some embodiments, the organic acid comprises glacial acetic acid. In some embodiments, the organic acid includes acetic acid, present in at least about 3 wt. % of the composition. In some embodiments (e.g., before equilibration and formation of PAA), the organic acid includes acetic acid, present in about 1-50 wt. %, 2-45 wt. %, 3-40 wt. %, 4-35 wt. %, 6-30 wt. %, 8-24 wt. %, 10-22 wt. %, 12-20 wt. %, about 14-18 wt. %, or about 4 wt. %, 5 wt. %, 6 wt. %, 7 wt. %, 8 wt. %, 9 wt. %, 10 wt. %, 11 wt. %, 12 wt. %, 13 wt. %, 14 wt. %, 15 wt. %, 16 wt. %, 17 wt. %, 18 wt. %, 19 wt. %, 20 wt. %, 21 wt. %, 22 wt. %, 23 wt. %, 24 wt. %, or about 25 wt. % of the composition. In some embodiments (e.g., after equilibration and formation of PAA), the organic acid includes acetic acid, present in about 1-20 wt. %, 2-18 wt. %, 3-17 wt. %, 4-16 wt. %, 5-15 wt. %, 6-14 wt. %, 7-13 wt. %, 8-12 wt. %, or about 9-11 wt. % of the composition. In some embodiments, the organic acid includes acetic acid, present in about 9 wt. % to about 11 wt. % of the composition. In some embodiments, the organic acid comprises acetic acid, present in about 16 wt. % of the composition.

In various embodiments, the chelator effectively chelates transition metals. In some embodiments the chelator includes a polymeric sulfonic acid resin.

In various embodiments, the surfactant includes a non-ionic surfactant. In various embodiments, the surfactant includes at least one of an anionic and cationic surfactant. In some embodiments the surfactant includes Pluronic^{®} 10R5 surfactant block copolymer. In some embodiments the surfactant includes Pluronic^{®} 10R5 surfactant block copolymer, present in at least about 0.1 wt. % of the composition. In some embodiments, the surfactant includes Pluronic^{®} 10R5 surfactant block copolymer, present in about 0.1-8.0 wt. %, 0.3-7.0 wt. %, 0.5-6.0 wt. %, 0.7-5.0 wt. %, 0.8-4.0 wt. %, about 1.0-3.0 wt. %, or about 0.5 wt. %, 1.0 wt. %, 1.4 wt. %, 1.8 wt. %, 2.0 wt. %, 2.2 wt. %, 2.6 wt. %, or about 3.0 wt. % of the composition. In some embodiments, the surfactant includes Pluronic^{®} 10R5 surfactant block copolymer, present in about 2 wt. % of the composition.

In various embodiments, the composition includes about 28 wt. % hydrogen peroxide, about 16 wt. % acetic acid, about 0.2 wt. % to about 2 wt. % polymeric resin chelator, optionally, about 2.0 wt. % Pluronic^{®} 10R5 surfactant block copolymer, and about 53 wt. % deionized water.

In various embodiments, the composition includes about 20.0 to about 26.0 wt. % hydrogen peroxide, about 9.0 to about 11.0 wt. % acetic acid, about 0.2 wt. % to about 2 wt. % polymeric resin chelator, optionally, about 2.0 wt. % Pluronic^{®} 10R5 surfactant block copolymer, about 53 wt. % deionized water and about 6.8 to about 7.5 wt. % peracetic acid.

In various embodiments, the cleaning composition includes: (a) hydrogen peroxide; (b) organic acid; (c) a polymeric sulfonic acid resin based chelator; and (d) surfactant. The composition includes less than about 1 wt. % of an anticorrosive agent. The composition can further optionally include water.

In one aspect, the hydrogen peroxide present in the composition can be from about 0.5 wt. % to about 30 wt. %, from about 0.5 wt. % to about 1.5 wt. %, from about 0.8 wt. % to about 1.2 wt. %, from about 20 wt. % to about 30 wt. % and all ranges and values from about 0.5 wt. % to about 30 wt. %.

In another aspect, the acetic acid present in the composition can be from about 1 wt. % to about 25 wt. %, from about 4 wt. % to about 20 wt. %, from about 4.5 wt. % to about 5.5 wt. %, from about 9 wt. % to about 17 wt. % and all ranges and values from about 1 wt. % to about 25 wt. %.

In still another aspect, the peracetic acid present in the composition can be from about 0.01 wt. % to about 25 wt. %, from about 0.05 wt. % to about 20 wt. %, from about 0.05 wt. % to about 0.1 wt. %, from about 3.5 wt. % to about 8 wt. % and all ranges and values from about 0.01 wt. % to about 25 wt. %.

In yet another aspect, the polymeric resin chelator present in the composition can be from about 0.1 wt. % to about 5 wt. %, from about 0.2 wt. % to about 2 wt. %, from about 0.5 wt. % to about 1.5 wt. % and all ranges and value from about 0.1 wt. % to about 5 wt. %.

Various embodiments provide for a composition that includes: (a) hydrogen peroxide, present in a concentration of about 0.5 wt. %to about 30 wt. %, e.g., about 28 wt. %; (b) acetic acid, present in a concentration of about 3 wt. % to about 25 wt. %, e.g., about 16 wt. %; (c) a sulfonic acid supported polymeric resin chelator present in a concentration of about 0.1 wt. % to about 5 wt. %, e.g., about 0.2 wt. % to about 0.7 wt. %; and, optionally, (d) Pluronic^{®} 10R5 surfactant block copolymer, present in a concentration of about 2.0 wt. %, wherein the composition comprises less than about 0.1 wt. % of an anticorrosive agent, e.g., 0 wt. % of an anticorrosive agent. The composition can further optionally include water. In some embodiments, the hydrogen peroxide and acetic acid can combine to form peracetic acid, present in about 4 wt. % to about 8 wt. %, e.g., 6.8-7.5 wt. %.

In certain aspects, the peracetic acid/hydrogen peroxide compositions are stabilized without the need for a phosphonic based chelator, such as 1-hydroxyethylidene-1, 1,-diphosphonic acid. In other aspects, a phosphonic based chelator, such as 1-hydroxyethylidene-1, 1,-diphosphonic acid can be included in the sterilant fluid, the cleaning composition, and therefore, component c), the polymeric sulfonic acid resin is optional.

The use of the polymeric stabilizer is detailed in pending US application 62/737,453, filed September 27, 2018, entitled "Peracetic Acid Stabilized Compositions with Polymeric Resins Chelators".

In specific embodiments, the cleaning solution(s) described herein can be formulated as, can exist as, and can be commercially available as a liquid concentrate disinfectant. The term "liquid concentrate" refers to a composition that is relatively undiluted and concentrated, having a low content of carrier, e.g., water. Having the composition be commercially available as a liquid concentrate will typically save costs associated with the manufacturing, shipping, and/or storage of the product.

When the cleaning solution(s)/composition(s) described herein is formulated as a liquid concentrate, the concentrate can subsequently be diluted with an appropriate amount of carrier (e.g., water) prior to use. Additionally, although considered to be a concentrate, when the cleaning solution(s) described herein is formulated as a liquid concentrate, a discrete and finite amount of carrier (e.g., water) can be employed.

Various embodiments provide for a one part, liquid concentrate disinfectant including about 20.0 about 26.0 wt. % hydrogen peroxide, about 9.0 to about 11.0 wt. % acetic acid, about 0.2 wt. % to about 2 wt. % polymeric resin chelator, about 2.0 wt. % Pluronic^{®} 10R5 surfactant block copolymer, about 53 wt. % deionized water and about 6.8 to about 7.5 wt. % peracetic acid.

In various embodiments, the cleaning solution(s) described herein can be configured for use in contacting at least one of medical equipment, medical device (e.g., reusable medical device or instrument, such as an endoscope), surface in the medical industry, dental equipment, dental device, and surface in the dental industry. In some embodiments, the cleaning solution(s) described herein may be used in the reconditioning of a soiled endoscopic device. In some embodiments, the compositions described herein are useful during the disinfection step of the high level disinfection cleaning process following use of the endoscope in a medical procedure. The term "endoscopic device" includes a plurality of minimally invasive surgical devices (e.g., scopes) that have been developed for specific uses. For example, upper and lower endoscopes are utilized for accessing the esophagus/stomach and the colon, respectively, angioscopes are utilized for examining blood vessels, and laparoscopes are utilized for examining the peritoneal cavity.

In some embodiments, catalysts for the formation of peracetic acid from hydrogen peroxide and acetic acid are employed. Suitable catalysts include, for example, inorganic acids, such as sulfuric acid (H₂SO₄), hydrochloric acid (HCl), phosphoric acid (H₃PO₄), and nitric acid (HNO₃).

In specific embodiments, the cleaning solution(s) described herein can be non-corrosive. The term "non-corrosive" or "noncorrosive" refers to a substance that will not destroy or irreversibly damage another surface or substance with which it comes into contact. The main hazards to people include damage to the eyes, the skin, and the tissue under the skin; inhalation or ingestion of a corrosive substance can damage the respiratory and gastrointestinal tracts. Exposure results in chemical burn. Having the composition be relatively non-corrosive will allow the user to employ the composition over a wider range of uses, exposing the composition to a wider range of substrates. For example, having the composition be relatively non-corrosive will allow the user to employ the composition as a disinfectant with certain medical devices that are highly sensitive to corrosive substances.

In specific embodiments, the cleaning solution(s) described herein can be non-toxic. The term "non-toxic" refers to a substance that has a relatively low degree to which it can damage a living or non-living organism. Toxicity can refer to the effect on a whole organism, such as an animal, bacterium, or plant, as well as the effect on a substructure of the organism, such as a cell (cytotoxicity) or an organ (organotoxicity), such as the liver (hepatotoxicity). A central concept of toxicology is that effects are dose-dependent; even water can lead to water intoxication when taken in large enough doses, whereas for even a very toxic substance such as snake venom there is a dose below which there is no detectable toxic effect. Having the composition be relatively non-toxic will allow a wider range of users be able to safely handle the composition, without serious safety concerns or risks.

In specific embodiments, the cleaning solution(s) described herein can be stable over extended periods of time (i.e., has a long-term stability). The term "long-term stability" refers to a substance undergoing little or no physical and/or chemical decomposition or degradation, over extended periods of time.

In further specific embodiments, the cleaning solution(s) described herein can be stable over extended periods of time, such that at about 1 atm and about 19°C, less than about 20 wt. %, e.g., 15 wt. %, 10 wt. %, or 5 wt. %, of each component independently degrades over about one year. In additional specific embodiments, the cleaning solution(s) described herein can be stable over extended periods of time, such that at about 1 atm and about 19°C, at least about 80 wt. % of each component, e.g., 85 wt. %, 90 wt. %, 95 wt. %, is independently present after about one year.

Having the composition be relatively stable over extended periods of time will allow the composition to retain its effectiveness over that time, ensuring that it will remain useful and active for its intended purpose. In contrast, in those compositions that do not retain their effectiveness over that time, product loss can result, which can be financially costly. Additionally, risks associated with the use of a product that has lost some or all of its effectiveness for the intended purpose can be hazardous, in that the product may not effectively achieve the desired goal. For example, when used to disinfect a medical device, use of a composition that has lost some or all of its effectiveness as a disinfectant may not effectively disinfect the medical device. Medical injuries can be sustained by the patient, including serious infections.

In specific embodiments, the cleaning solution(s) described herein can be formulated as, can exist as, and is commercially available as, a one-part composition. The term "one-part composition" refers to all chemical components of a composition being present together, such that they are each in intimate and physical contact with one another, and are each present in a single container. Having the composition be commercially available as a one-part composition will be more cost effective (e.g., lower manufacturing costs associated with fewer containers), and will avoid the necessity of the user mixing or combining multiple components together, prior to using.

In specific embodiments, the cleaning solution(s) described herein can be essentially free of buffer. In further specific embodiments, the cleaning solution(s) described herein can include less than about 0.1 wt. % buffer. The term "buffer," "buffering agent," or "buffering substance" refers to a weak acid or base used to maintain the acidity (pH) of a solution at a chosen value. The function of a buffering agent is to prevent a rapid change in pH when acids or bases are added to the solution. Buffering agents have variable properties--some are more soluble than others; some are acidic while others are basic.

In specific embodiments, the cleaning solution(s) described herein can be essentially free of transition metals. In further specific embodiments, the cleaning solution(s) described herein can include less than about 0.001 wt. % transition metals. In further specific embodiments, the cleaning solution(s) described herein can include less than about 0.0001 wt. % transition metals. In further specific embodiments, the cleaning solution(s) described herein can include less than about 0.00001 wt. % transition metals. Having the composition include a minimal amount of transition metals decreases the likelihood that the transition metals will cause degradation and/or decomposition of the composition, over the extended periods of time associates with the manufacturing, shipping, and storage of the composition. This is especially so when the composition is formulated as a concentrated, one-part composition.

The term "transition metal," "transition metals" or "transition element" refers to an element whose atom has an incomplete d sub-shell, or which can give rise to cations with an incomplete d sub-shell. Transition metals include scandium (Sc), titanium (Ti), vanadium (V), chromium (Cr), manganese (Mn), iron (Fe), cobalt (Co), nickel (Ni), copper (Cu), zinc (Zn), yttrium (Y), zirconium (Zr), niobium (Nb), molybdenum (Mo), technetium (Tc), ruthenium (Ru), rhodium (Rh), palladium (Pd), silver (Ag), cadmium (Cd), hafnium (Hf), tantalum (Ta), tungsten (W), rhenium (Re), osmium (Os), iridium (Ir), platinum (Pt), gold (Au), mercury (Hg), rutherfordium (Rf), dubnium (Db), seaborgium (Sg), bohrium (Bh), hassium (Hs) and copernicium (Cn).

In specific embodiments described herein, the transition metal can be naturally occurring. Naturally occurring transition metals include scandium (Sc), titanium (Ti), vanadium (V), chromium (Cr), manganese (Mn), iron (Fe), cobalt (Co), nickel (Ni), copper (Cu), zinc (Zn), yttrium (Y), zirconium (Zr), niobium (Nb), molybdenum (Mo), technetium (Tc), ruthenium (Ru), rhodium (Rh), palladium (Pd), silver (Ag), cadmium (Cd), hafnium (Hf), tantalum (Ta), tungsten (W), rhenium (Re), osmium (Os), iridium (Ir), platinum (Pt), gold (Au), and mercury (Hg).

In specific embodiments, the cleaning solution(s) described herein can be essentially free of heavy metals. In further specific embodiments, the cleaning solution(s) described herein can include less than about 0.001 wt. % heavy metals. In further specific embodiments, the cleaning solution(s) described herein can include less than about 0.0001 wt. % heavy metals. In further specific embodiments, the cleaning solution(s) described herein can include less than about 0.00001 wt. % heavy metals. Having the composition include a minimal amount of heavy metals decreases the likelihood that the transition metals will cause degradation and/or decomposition of the composition, over the extended periods of time associates with the manufacturing, shipping, and storage of the composition. This is especially so when the composition is formulated as a concentrated, one-part composition.

The term "heavy metal," "heavy metals" or "toxic metal" refers to metals that are relatively toxic, and mainly include the transition metals, some metalloids, lanthanides, and actinides. Examples of toxic metals include, e.g., iron (Fe), cobalt (Co), copper (Cu), manganese (Mn), molybdenum (Mo), zinc (Zn), mercury (Hg), plutonium (Pu), lead (Pb), vanadium (V), tungsten (W), cadmium (Cd), aluminium (Al), beryllium (Be), and arsenic (As).

The present embodiments also provide for kits that includes: (a) an enclosed container that includes a removable closure; (b) the cleaning solution(s) described herein as described herein, which is located inside the enclosed container; (c) delivery system(s), (d) optional peristaltic pump(s), (e) optional porous filter(s) and (f) printed indicia located on the enclosed container.

In specific embodiments, the enclosed container can be opaque. In additional specific embodiments, the enclosed container can be manufactured from high density polyethylene (HDPE), thereby providing the requisite opacity. Having the enclosed container be manufactured from high density polyethylene (HDPE) will decrease the likelihood that the composition will degrade and/or decompose over extended periods of time, due to excessive exposure to direct sunlight.

The term "high-density polyethylene" or "HDPE" refers to a polyethylene thermoplastic made from petroleum. The mass density of high-density polyethylene can range from 0.93 to 0.97 g/cm³. Although the density of HDPE is only marginally higher than that of low-density polyethylene, HDPE has little branching, giving it stronger intermolecular forces and tensile strength than LDPE. The difference in strength exceeds the difference in density, giving HDPE a higher specific strength. It is also harder and more opaque and can withstand somewhat higher temperatures (120°C/248°F for short periods, 110°C/230°F continuously). HDPE is resistant to many different solvents.

The term "solvent" as used herein refers to a liquid that can dissolve a solid, liquid, or gas. Non-limiting examples of solvents are silicones, organic compounds, water, alcohols, ionic liquids, and supercritical fluids.

The term "opaque" refers to an object that is neither transparent (allowing all light to pass through) nor translucent (allowing some light to pass through). When light strikes an interface between two substances, in general some may be reflected, some absorbed, some scattered, and the rest transmitted (also see refraction). Reflection can be diffuse, for example light reflecting off a white wall, or specular, for example light reflecting off a mirror. An opaque substance transmits no light, and therefore reflects, scatters, or absorbs all of it. Both mirrors and carbon black are opaque. Opacity depends on the frequency of the light being considered. For instance, some kinds of glass, while transparent in the visual range, are largely opaque to ultraviolet light. More extreme frequency-dependence is visible in the absorption lines of cold gases.

To further decrease the likelihood that the composition will degrade and/or decompose over extended periods of time, the composition should avoid, when feasible: excessive exposure to direct sunlight, excessive heat and/or elevated temperatures. As such, in specific embodiments, the enclosed container of the kit can include printed indicia, with instructions to avoid excessive heat, elevated temperatures, direct sunlight, or a combination thereof.

Over extended periods of time, hydrogen peroxide and/or peracetic acid present in the composition will be susceptible to degrade or decompose (and a portion of the hydrogen peroxide may degrade or decompose), thereby evolving oxygen.

In specific embodiments, the enclosed container includes a head space, pressure valve, or combination thereof. In specific embodiments, the enclosed container includes a pressure valve, configured to release excessive gas from within the enclosed container. The presence of a head space and pressure valve in the container will allow for the escape of gas (e.g., oxygen) from the enclosed container, without the likelihood that the container will explode from the elevated pressure that would otherwise develop.

The term "head space" refers to a portion of the inside of a container that is not occupied by the liquid contents of the container. In particular, when a container includes a liquid composition, a head space can be present in the container such that a portion of the inside of the container does not include liquid composition, but instead includes a gas or vacuum. In specific embodiments, the head space can include oxygen (O₂), peracetic acid and/or acetic acid vapor. In further specific embodiments, the head space can be present in up to about 20% (v/v) of the inside of the enclosed container.

The term "pressure valve" refers to a mechanical device that will permit for the passage of gas and not fluid, preferably in one direction only, for example, exiting a container housing the pressure valve, and not entering the container.

The cleaning solution(s) described herein can be used to effectively reduce the number of microbes located upon a substrate. In specific embodiments, the composition can effectively kill and/or inhibit a microorganism (e.g., virus, fungus, mold, slime mold, algae, yeast, mushroom and/or bacterium), thereby disinfecting the substrate.

In additional specific embodiments, the composition can effectively sanitize a substrate, thereby simultaneously cleaning and disinfecting the substrate. In additional specific embodiments, the composition can effectively kill or inhibit all forms of life, not just microorganisms, thereby acting as a biocide.

In specific embodiments, the composition can effectively disinfectant a substrate. In further specific embodiments, the composition can effectively disinfectant the surface of a substrate. In additional specific embodiments, the composition can effectively sterilize a substrate. In further specific embodiments, the composition can effectively sterilize the surface of a substrate.

The term "microbe," "microbes" "microorganism," or "micro-organism" refers to a microscopic organism that comprises either a single cell (unicellular), cell clusters, or no cell at all (acellular). Microorganisms are very diverse; they include bacteria, fungi, archaea, and protists; microscopic plants (green algae); and animals such as plankton and the planarian. Some microbiologists also include viruses, but others consider these as non-living. Most microorganisms are unicellular (single-celled), but this is not universal, since some multicellular organisms are microscopic, while some unicellular protists and bacteria, like Thiomargarita namibiensis, are macroscopic and visible to the naked eye.

The term "virus" refers to a small infectious agent that can replicate only inside the living cells of organisms. Virus particles (known as virions) consist of two or three parts: the genetic material made from either DNA or RNA, long molecules that carry genetic information; a protein coat that protects these genes; and in some cases an envelope of lipids that surrounds the protein coat when they are outside a cell. The shapes of viruses range from simple helical and icosahedral forms to more complex structures. The average virus is about one one-hundredth the size of the average bacterium. An enormous variety of genomic structures can be seen among viral species; as a group they contain more structural genomic diversity than plants, animals, archaea, or bacteria. There are millions of different types of viruses, although only about 5,000 of them have been described in detail. A virus has either DNA or RNA genes and is called a DNA virus or a RNA virus respectively. The vast majority of viruses have RNA genomes. Plant viruses tend to have single-stranded RNA genomes and bacteriophages tend to have doublestranded DNA genomes.

The term "fungi" or "fungus" refers to a large and diverse group of eucaryotic microorganisms whose cells contain a nucleus, vacuoles, and mitochondria. Fungi include algae, molds, yeasts, mushrooms, and slime molds. See, Biology of Microorganisms, T. Brock and M. Madigan, 6th Ed., 1991, Prentice Hill (Englewood Cliffs, N.J.). Exemplary fungi include Ascomycetes (e.g., Neurospora, Saccharomyces, Morchella), Basidiomycetes (e.g., Amanita, Agaricus), Zygomycetes (e.g., Mucor, Rhizopus), Oomycetes (e.g., Allomyces), and Deuteromycetes (e.g., Penicillium, Aspergillus).

The term "mold" refers to a filamentous fungus, generally a circular colony that may be cottony, wooly, etc. or glabrous, but with filaments not organized into large fruiting bodies, such as mushrooms. See, e.g., Stedman's Medical Dictionary, 25th Ed., Williams & Wilkins, 1990 (Baltimore, Md.). One exemplary mold is the Basidiomycetes called wood-rotting fungi. Two types of wood-rotting fungi are the white rot and the brown rot. An ecological activity of many fungi, especially members of the Basidiomycetes is the decomposition of wood, paper, cloth, and other products derived from natural sources. Basidiomycetes that attack these products are able to utilize cellulose or lignin as carbon and energy sources. Lignin is a complex polymer in which the building blocks are phenolic compounds. It is an important constituent of woody plants. The decomposition of lignin in nature occurs almost exclusively through the agency of these wood-rotting fungi. Brown rot attacks and decomposes the cellulose and the lignin is left unchanged. White rot attacks and decomposes both cellulose and lignin. See, Biology of Microorganisms, T. Brock and M. Madigan, 6th Ed., 1991, Prentice Hill (Englewood Cliffs, N.J.).

The term "slime molds" refers to nonphototrophic eucaryotic microorganisms that have some similarity to both fungi and protozoa. The slime molds can be divided into two groups, the cellular slime molds, whose vegetative forms are composed of single amoeba like cells, and the acellular slime molds, whose vegative forms are naked masses of protoplasms of indefinite size and shape called plasmodia. Slime molds live primarily on decaying plant matter, such as wood, paper, and cloth. See, Biology of Microorganisms, T. Brock and M. Madigan, 6th Ed., 1991, Prentice Hill (Englewood Cliffs, N.J.).

The term "algae" refers to a large and diverse assemblage of eucaryotic organisms that contain chlorophyll and carry out oxygenic photosynthesis. See, Biology of Microorganisms, T. Brock and M. Madigan, 6th Ed., 1991, Prentice Hill (Englewood Cliffs, N.J.). Exemplary algae include Green Algae (e.g., Chlamydomonas), Euglenids (e.g., Euglena), Golden Brown Algae (e.g., Navicula), Brown Algae (e.g., Laminaria), Dinoflagellates (e.g., Gonyaulax), and Red Algae (e.g., Polisiphonia).

The term "yeast" refers to unicellular fungi, most of which are classified with the Ascomytes. See, Biology of Microorganisms, T. Brock and M. Madigan, 6th Ed., 1991, Prentice Hill (Englewood Cliffs, N.J.).

The term "mushrooms" refer to filamentous fungi that are typically from large structures called fruiting bodies, the edible part of the mushroom. See, Biology of Microorganisms, T. Brock and M. Madigan, 6th Ed., 1991, Prentice Hill (Englewood Cliffs, N.J.).

The term "bacterium" or "bacteria" refers to a large domain of prokaryotic microorganisms. Typically a few micrometers in length, bacteria have a wide range of shapes, ranging from spheres to rods and spirals. Bacteria are present in most habitats on Earth, growing in soil, acidic hot springs, radioactive waste, water, and deep in the Earth's crust, as well as in organic matter and the live bodies of plants and animals, providing outstanding examples of mutualism in the digestive tracts of humans, termites and cockroaches. There are typically about 40 million bacterial cells in a gram of soil and a million bacterial cells in a milliliter of fresh water; in all, there are approximately five nonillion (5 x 10³⁰) bacteria on Earth, forming a biomass that exceeds that of all plants and animals. Most bacteria have not been characterized, and only about half of the phyla of bacteria have species that can be grown in the laboratory.

The term "P. aeruginosa" or "Pseudomonas aeruginosa" refers to a common bacterium that can cause disease in animals, including humans. It is found in soil, water, skin flora, and most man-made environments throughout the world. It thrives not only in normal atmospheres, but also in hypoxic atmospheres, and has, thus, colonized many natural and artificial environments. It uses a wide range of organic material for food; in animals, the versatility enables the organism to infect damaged tissues or those with reduced immunity. The symptoms of such infections are generalized inflammation and sepsis. If such colonizations occur in critical body organs, such as the lungs, the urinary tract, and kidneys, the results can be fatal. Because it thrives on most surfaces, this bacterium is also found on and in medical equipment, including catheters, causing cross-infections in hospitals and clinics. It is implicated in hot-tub rash.

The term "S. aureus" or "Staphylococcus aureus" refers to a facultative anaerobic Gram-positive bacterium. It is frequently found as part of the normal skin flora on the skin and nasal passages. It is estimated that 20% of the human population are long-term carriers of S. aureus. S. aureus is the most common species of staphylococci to cause Staph infections. The reasons S. aureus is a successful pathogen are a combination host and bacterial immuno-evasive strategies. One of these strategies is the production of carotenoid pigment staphyloxanthin which is responsible for the characteristic golden color of S. aureus colonies. This pigment acts as a virulence factor, primarily being a bacterial antioxidant which helps the microbe evade the host's immune system in the form of reactive oxygen species which the host uses to kill pathogens.

S. aureus can cause a range of illnesses from minor skin infections, such as pimples, impetigo, boils (furuncles), cellulitis folliculitis, carbuncles, scalded skin syndrome, and abscesses, to life-threatening diseases such as pneumonia, meningitis, osteomyelitis, endocarditis, toxic shock syndrome (TSS), bacteremia, and sepsis. Its incidence is from skin, soft tissue, respiratory, bone, joint, endovascular to wound infections. It is still one of the five most common causes of nosocomial infections, often causing postsurgical wound infections. Each year, some 500,000 patients in American hospitals contract a staphylococcal infection.

Methicillin-resistant S. aureus, abbreviated MRSA and often pronounced "mer-sa" (in North America), is one of a number of greatly-feared strains of S. aureus which have become resistant to most antibiotics. MRSA strains are most often found associated with institutions such as hospitals, but are becoming increasingly prevalent in community-acquired infections.

The term "E. hirae" or "Enterococcus hirae" refers to a species of Enterococcus.

The term "M. terrae" or "Mycobacterium terrae" refers to a slow-growing species of Mycobacterium. It is an ungrouped member of the third Runyon (nonchromatogenic mycobacteria). It is known to cause serious skin infections, which are relatively resistant to antibiotic therapy

The term "Mycobacterium avium complex," "M. avium complex" or "MAC" refers to a group of genetically related bacteria belonging to the genus Mycobacterium. It includes Mycobacterium avium and Mycobacterium intracellulare.

The term "M. avium" or "mycobacterium avium" refers to a species of Mycobacterium.

The term "M. intracellulare" or "mycobacterium intracellulare" refers to a species of Mycobacterium.

The phrase "chemical indicator composition" refers to a mixture of agents that include and provides for a visual color change that provides an indication, when subjected to peracetic acid, that the concentration of the peracetic acid is at a level sufficient to disinfect/sterilize a contaminated device or if the level of peracetic acid is not sufficient to accomplish disinfection/sterilization.

The agents of the chemical indicator composition include a starch having about 15% to 40% amylose content, e.g., 20-30% amylose content, a dibasic phosphate agent, a monobasic phosphate agent, an iodide source, glycerol, mercapto benzimide sulfonate with the remainder being water. It should be understood that the liquid chemical indicator composition is applied to a substrate and dried to provide a test strip.

Suitable starches with amylose include, for example, potato starch, arrowroot starch, corn starch or tapioca starch.

Suitable dibasic phosphate agents include, for example, sodium phosphate dibasic, potassium phosphate dibasic, and dibasic monohydrogen phosphates. Other dibasic agents are suitable as substitutes that provide a pH range of 6.8 to 7.2.

Suitable monobasic phosphate agents include, for example, potassium phosphate monobasic, sodium phosphate monobasic, and monobasic monohydrogen phosphates. Other monobasic agents are suitable as substitutes that provide a pH range of 6.8 to 7.2.

Suitable iodide sources include, for example, sodium iodide, potassium iodide, lithium iodide, or rubidium iodide. Any source of iodide ion would be a suitable substitute.

The term "glycerol" refers to propane-1, 2, 3-triol and is also known as glycerin, glycerine, propanetriol, 1, 2, 3-trihydroxypropane or 1, 2, 3 propanetriol. Suitable substitutes for glycerol include polyols having 3 or more hydroxyl groups.

The term "mercapto benzimide sulfonate" refers to a salt of 2-thioxo-2,3-dihydro-1H-benzimidazole-5-sulfonic acid and is generally used as the sodium salt.

In one aspect, the starch of the chemical indicator composition is present in a range of from about 3% to about 4%, from about 3.1% to about 4%, from about 3.2% to about 4%, from about 3.3% to about 4%, from about 3.4% to about 4%, from about 3.5% to about 4%, from about 3.6% to about 4%, from about 3.7% to about 4%, from about 3.8% to about 4%, from about 3.9% to about 4% and all ranges between e.g., from about 3.3% to about 3.5% by weight of the total composition.

In another aspect, the dibasic phosphate agent of the chemical indicator composition is present in a range of from about 0.6% to about 1%, from about 0.7% to about 1%, from about 0.8% to about 1%, from about 0.9% to 1% and all ranges between 0.6% and about 1%, e.g., from about 0.7% to about 0.9% by weight of the total composition.

In one embodiment, the monobasic phosphate agent of the chemical indicator composition is present in a range of from about 0.3% to about 0.5%, from about 0.35% to about 0.48%, from about 0.37% to about 0.46%, from about 0.39% to about 0.44% from about 0.41% to about 0.44% and all ranges between 0.3% to about 0.5%, e.g., from about 0.40% to about 0.42% by weight of the total composition.

In another embodiment, the iodide of the chemical indicator composition is present in a range of from about 0.25% to about 1.2%, from about 0.28% to about 1.1%, from about 0.39% to about 0.92%, from about 0.5% to about 0.9%, from about 0.6 to about 0.8% and all ranges between 0.25% to about 1.2%, e.g., from about 0.28% to about 1.12%, from about 0.28% to about 0.92% by weight of the total composition.

In still another embodiment, the glycerol of the chemical indicator composition is present in a range of from about 7% to about 7.3%, from about 7.1% to about 7.2%, from about 7.11% to about 7.19%, from about 7.12% to about 7.15%, from about 7.12% to about 7.14% and all ranges between 7% to about 7.3%, e.g., from about 7.10% to about 7.17% by weight of the total composition.

In yet another embodiment, the mercapto benzimide sulfonate of the chemical indicator composition is present in a range of from about 0.2% to about 0.7%, from about 0.5% to about 0.6%, from about 0.6% to about 0.7% and all ranges between 0.4% to about 0.7%, e.g., from about 0.65% and 0.7%, from about 0.67% to about 0.69% by weight of the total composition.

In still another embodiment, the water content of the chemical indicator composition is the remaining balance of the total weight of the composition and is generally from about 85% to about 91%, from about 86% to about 90%, from about 87% to about 89% and all ranges between 85% to about 91%, e.g., from about 86% to about 87% by weight of the total composition.

In an embodiment, the chemical indicator composition includes a starch, a phosphate dibasic agent, a phosphate monobasic agent, an iodide, glycerol, mercapto benzimide sulfonate and water.

In another embodiment, the chemical indicator composition includes a starch in a range of from about 3% to about 4%, a phosphate dibasic agent present in a range of from about 0.6% to about 1%, a phosphate monobasic agent present in a range of from about 0.3% to about 0.5%, an iodide present in a range of from about 0.25% to about 1.2%, glycerol 7% to about 7.3%, mercapto benzimide sulfonate present in a range of from about 0.2% to about 0.7% with the remainder being water to equal 100% by weight of the total composition.

In an embodiment, the chemical indicator composition includes potato starch, sodium phosphate dibasic, potassium phosphate monobasic, potassium iodide, glycerol, mercapto benzimide sulfonate and water.

In still another embodiment, the chemical indicator composition includes potato starch in a range of from about 3% to about 4%, sodium phosphate dibasic agent present in a range of from about 0.6% to about 1%, potassium phosphate monobasic agent present in a range of from about 0.3% to about 0.5%, potassium iodide present in a range of from about 0.25% to about 1.2%, glycerol 7% to about 7.3%, mercapto benzimide sulfonate present in a range of from about 0.2% to about 0.7% with the remainder being water to equal 100% by weight of the total composition.

In another embodiment, the chemical indicator composition includes 3.4 weight percent of a starch with an amylose concentration of about 20 to 30%, about 0.8 weight percent of a dibasic phosphate agent, about 0.41 weight percent of a monobasic phosphate, about 0.28 to about 0.92 weight percent of an iodide, about 7.13 weight percent glycerol, from about 0.29 to about 0.68 weight percent mercapto benzimide sulfonate, with the remainder of about 86.58 to about 90.19 weight percent water.

In still another embodiment, the chemical indicator composition includes 3.4 weight percent of potato starch, about 0.8 weight percent of sodium dibasic phosphate agent, about 0.41 weight percent of potassium monobasic phosphate, about 0.28 to about 0.92 weight percent of potassium iodide, about 7.13 weight percent glycerol, from about 0.29 to about 0.68 weight percent mercapto benzimide sulfonate, with the remainder of about 86.58 to about 90.19 weight percent water.

Substrates useful in embodiments of the present disclosure may comprise, for example, a glass, an organic polymer, a silica particle, a metal, a ceramic, a fabric, a paper, and combinations thereof. Substrates suitable for use in embodiments of the present disclosure may be transparent or opaque. In some embodiments, the substrate may comprise a polymer film, a membrane, or a paper

In some embodiments, the substrate may include a transparent polymer film such as, for example, a polyethylene terephthalate, a polymethyl methacrylate, a polycarbonate, and combinations thereof. In some embodiments, the substrate may comprise a membrane such as, for example, polyethersulfone membrane and/or a nylon membrane. In some embodiments, the substrate may comprise a nylon membrane selected from the group consisting of an uncharged nylon membrane, a positively charged nylon membrane, a negatively charged nylon membrane, and combinations thereof. In some embodiments, the substrate may comprise a silica particle selected from the group consisting of an uncharged silica particle, a positively charged silica particle, a negatively charged silica particle, and combinations thereof. In some embodiments, the substrate may be selected from the group consisting of a nylon membrane, a silica particle, a polymer film, and combinations thereof. In some embodiments, the substrate may comprise a silica particle affixed to a pressure sensitive adhesive-coated polymer film. In some embodiments, the silica particle may be functionalized silica particle, such as, for example, a trimethylammonium functionalized silica particle, with a counterion, such as, for example, a carbonate counterion or a chloride counterion.

The chemical indicator composition can be applied to the substrate by a suitable method known to those of ordinary skill in the relevant art including, for example, spin coating, dip coating, spraying, brushing, roll coating, gravure coating, curtain coating, knife coating, and slot coating. In some embodiments, heating may be advantageously applied after coating with or without blowing of air over the treated test strip (e.g., to facilitate removal of water from the chemical indicator composition).

The invention will be further described with reference to the following non-limiting Examples. Unless otherwise indicated, all percentages are by weight.

### Examples

### Preparation of Formulations

PAA Test Strip Formulation Examples 1 through 19 are noted below.

| **Components** | **Formulas** | | |
|---|---|---|---|
| | 1 | 2 | 3 |
| Potato Starch | 3.40% | 3.40% | 3.40% |
| Sodium Phosphate Dibasic | 0.80% | 0.80% | 0.80% |
| Potassium Phosphate Monobasic | 0.41% | 0.41% | 0.41% |
| Potassium Iodide | 0.28% | 0.28% | 1.12% |
| Glycerol | 7.13% | 7.13% | 7.13% |
| Mercapto Benzimide Sulfonate | 0.56% | 0.49% | 0.56% |
| DI Water | 87.42% | 87.49% | 86.58% |

| **Components** | **Formulas** | | |
|---|---|---|---|
| | 4 | 5 | 6 |
| Potato Starch | 3.40% | 3.40% | 3.40% |
| Sodium Phosphate Dibasic | 0.80% | 0.80% | 0.80% |
| Potassium Phosphate Monobasic | 0.41% | 0.41% | 0.41% |
| Potassium Iodide | 1.12% | 0.84% | 0.56% |
| Glycerol | 7.13% | 7.13% | 7.13% |
| Mercapto Benzimide Sulfonate | 0.49% | 0.60% | 0.60% |
| DI Water | 86.65% | 86.82% | 87.10% |

| **Components** | **Formulas** | | |
|---|---|---|---|
| | 7 | 8 | 9 |
| Potato Starch | 3.40% | 3.40% | 3.40% |
| Sodium Phosphate Dibasic | 0.80% | 0.80% | 0.80% |
| Potassium Phosphate Monobasic | 0.41% | 0.41% | 0.41% |
| Potassium Iodide | 0.39% | 0.84% | 0.84% |
| Glycerol | 7.13% | 7.13% | 7.13% |
| Mercapto Benzimide Sulfonate | 0.60% | 0.55% | 0.65% |
| DI Water | 87.27% | 86.87% | 86.77% |

| **Components** | **Formulas** | | |
|---|---|---|---|
| | 10 | 11 | 12 |
| Potato Starch | 3.40% | 3.40% | 3.40% |
| Sodium Phosphate Dibasic | 0.80% | 0.80% | 0.80% |
| Potassium Phosphate Monobasic | 0.41% | 0.41% | 0.41% |
| Potassium Iodide | 0.48% | 0.84% | 0.88% |
| Glycerol | 7.13% | 7.13% | 7.13% |
| Mercapto Benzimide Sulfonate | 0.60% | 0.63% | 0.63% |
| DI Water | 87.18% | 86.79% | 86.75% |

| **Components** | **Formulas** | | |
|---|---|---|---|
| | 13 | 14 | 15 |
| Potato Starch | 3.40% | 0.00% | 3.40% |
| Sodium Phosphate Dibasic | 0.80% | 0.80% | 0.80% |
| Potassium Phosphate Monobasic | 0.41% | 0.41% | 0.41% |
| Potassium Iodide | 0.92% | 0.84% | 0.84% |
| Glycerol | 7.13% | 7.13% | 7.13% |
| Mercapto Benzimide Sulfonate | 0.63% | 0.63% | 0.66% |
| DI Water | 86.71% | 90.19% | 86.76% |

| **Components** | **Formulas** | | | |
|---|---|---|---|---|
| | 16 | 17 | 18 | 19 |
| Potato Starch | 3.40% | 3.40% | 3.40% | 3.40% |
| Sodium Phosphate Dibasic | 0.80% | 0.80% | 0.80% | 0.80% |
| Potassium Phosphate Monobasic | 0.41% | 0.41% | 0.41% | 0.41% |
| Potassium Iodide | 0.84% | 0.84% | 0.80% | 0.88% |
| Glycerol | 7.13% | 7.13% | 7.13% | 7.13% |
| Mercapto Benzimide Sulfonate | 0.68% | 0.67% | 0.67% | 0.67% |
| DI Water | 86.74% | 86.75% | 86.79% | 86.71% |

| | | | | |
|---|---|---|---|---|
| % are by weight | | | | |

The water and starch components of the formulation were mixed together and heat was applied to the solution until a temperature of 90 degrees centigrade was reached. The heated solution was then maintained at 90 degrees centigrade for 10 minutes before cooling to room temperature. Once the starch and water solution was cooled to room temperature the additional components were added and then used for coating onto a cellulosic (Whatman paper grade 54 SFC cellulose ) test strip material. The test strip material was dipped into a vessel containing one of the formulations noted above, dried at 60°C at a line speed of 5.5 feet/minute. The dried treated test strip material was then contacted with a doubled sided tape to which a plastic backing of PVC (Tri State Plastic Inc. or Perfectfoil BV) was attached to form a test strip assembly. The test strip assembly was then cut into coupons (63.4 mm x 5.23 mm)(2.5 inches x 0.20 inches) which can be used to test peracetic acid concentration in sample solutions.

### Testing procedure of PAA

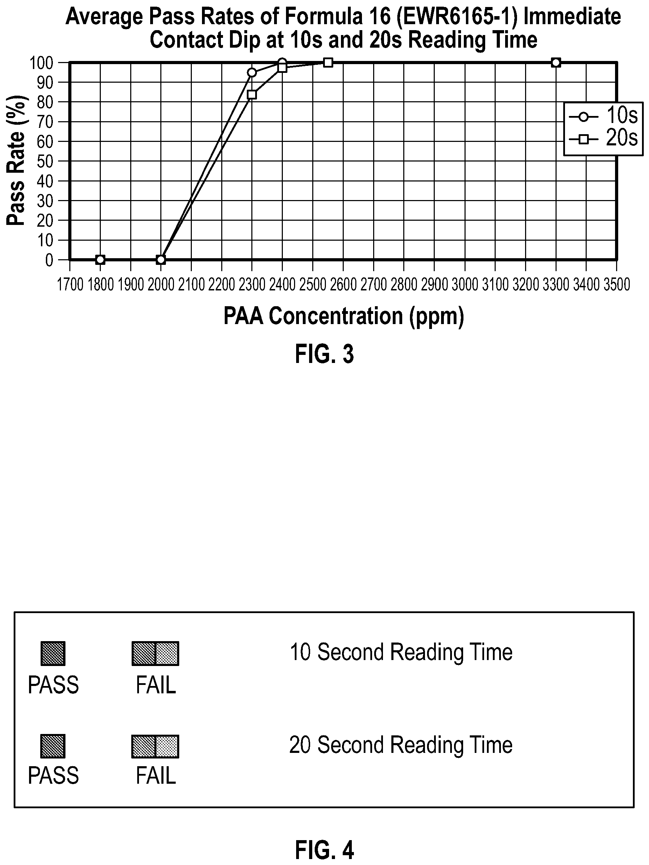

A test strip is dipped into a container with 10 mL of PAA solution and a timer/stopwatch is started. The test strip is then removed from the PAA solution within 0.5 seconds of dip time and shaken to remove any extra solution on the test strip. The test strip is then placed alongside or on a reference standard card and read at 10 seconds or 20 seconds to determine whether the PAA solution concentration passes or fails the test criteria of having a minimum concentration of 2000 ppm PAA. Unsure reading results are considered as a fail. A standard reference card, for example depicted in Figure 4, provides the tester a visual confirmation whether the solution has a sufficient concentration of PAA. The standard reference card can have one or two or more prepared images (coupons) and their coloration to help the tester determine whether the tested solution has a sufficient concentration PAA. The reference coupon images can show the color/image of what a passing test looks like (see the left image of Figure 4) and what failing tests look like (see right images of Figure 4).

Pass Rates of Formula 16 (EWR6165-1) Immediate Contact Dip Followed by 10 or 20 Second Reading Time

| Analyst | Reading time | Immediate Contact Dip Pass Rate (%) at Concentration (ppm) | | | | | |
|---|---|---|---|---|---|---|---|
| | | 1800 | 2000 | 2300 | 2400 | Nominal | 3300 |
| 1 | 10s | 0 | 0 | 85 | 99 | 100 | 100 |
| | 20s | 0 | 0 | 71 | 99 | 100 | 100 |
| 2 | 10s | 0 | 0 | 99 | 99 | 100 | 100 |
| | 20s | 0 | 0 | 92 | 95 | 100 | 100 |
| 3 | 10s | 0 | 0 | 96 | 99 | 100 | 100 |
| | 20s | 0 | 0 | 83 | 95 | 100 | 100 |
| 4 | 10s | 0 | 1 | 100 | 100 | 100 | 100 |
| | 20s | 0 | 1 | 87 | 100 | 100 | 100 |
| Average | 10s | 0 | 0.25 | 95 | 99.25 | 100 | 100 |
| | 20s | 0 | 0.25 | 83.25 | 97.25 | 100 | 100 |

Immediate contact dip time as used herein refers to a dip time of less than 0.5 seconds.

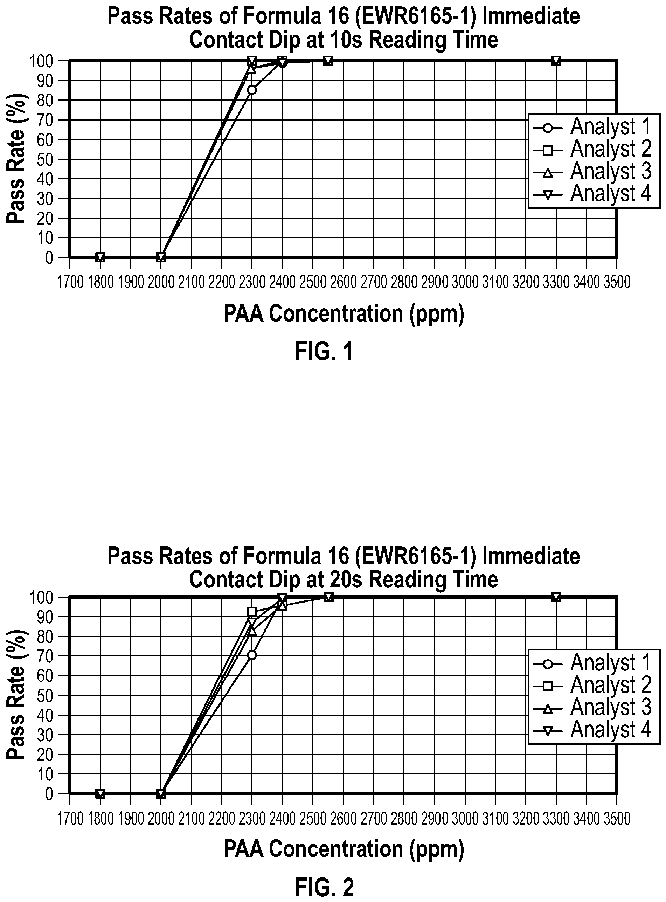

Figure 1 provides pass Rates of Formula 16 (EWR6165-1) immediate contact dip followed by a 10 second reading time.
Figure 2 provides pass rates of Formula 16 (EWR6165-1) immediate contact dip followed by a 20 second reading time.
Figure 3 provides average pass rates of formula 16 (EWR6165-1) immediate contact dip followed by a 10 or 20 second reading time.
Figure 4 is a reference card standard showing passing coupons and coupons which failed. The reference coupon images of the reference card can show the color/image of what a passing test strip looks like (see the left image of Figure 4) and what failing test strip looks like (see right images of Figure 4).

## Claims

1. A test strip comprising:
a substrate; and
a chemical indicator composition disposed and dried thereon, wherein the chemical indicator composition, before drying, comprises:
a starch;
a phosphate dibasic agent;
a phosphate monobasic agent;
an iodide;
glycerol
mercapto benzimide sulfonate; and
from about 85% to about 91% by weight of water of the total weight percent of the composition.

2. The test strip of claim 1, wherein the starch is a potato starch, an arrowroot starch, a corn starch or a tapioca starch having from about 15% to 40% amylose content is present from about 3% to about 4% of the total weight percent of the composition.

3. The test strip of claim 2, wherein the starch is present from about 3.2% to about 3.6% of the total weight percent of the composition.

4. The test strip of any of claims 1 through 3, wherein the starch is potato starch.

5. The test strip of any of claims 1 through 4, wherein the phosphate dibasic agent is present from about 0.6% to about 1% of the total weight percent of the composition.

6. The test strip of any of claims 1 through 5, wherein the phosphate dibasic agent is sodium phosphate dibasic.

7. The test strip of any of claims 1 through 6, wherein the phosphate monobasic agent is present from about 0.3% to about 0.5% of the total weight percent of the composition.

8. The test strip of any of claims 1 through 7, wherein the phosphate monobasic agent is potassium phosphate monobasic.

9. The test strip of any of claim 1 through 8, wherein the iodide is present from about 0.25% to about 1.2% of the total weight percent of the composition.

10. The test strip of claim 1, wherein the iodide is potassium iodide.

11. The test strip of any of claims 1 through 10, wherein the glycerol is present from about 7% to about 7.3% of the total weight percent of the composition.

12. The test strip of any of claims 1 through 11, wherein the mercapto benzimide sulfonate is present from about 0.2% to about 0.7% of the total weight percent of the composition.

13. The test strip of any of claims 1 through 12, wherein the water is present from about 86% to about 91% of the total weight percent of the composition.

14. The test strip of any of claims 1 through 13, wherein the substrate is a cellulose.

15. The test strip of any of claims 1 through 14, wherein the chemical indicator composition does not provide a positive result with a minimum concentration of less than 2000 ppm peracetic acid.

## Patentansprüche

1. Teststreifen, umfassend:
ein Substrat; und
eine darauf angeordnete und getrocknete chemische Indikatorzusammensetzung, wobei die chemische Indikatorzusammensetzung vor dem Trocknen folgendes umfasst:
eine Stärke;
ein zweibasisches Phosphatmittel;
ein einbasisches Phosphatmittel;
ein Iodid;
Glycerin
Mercaptobenzimidsulfonat; und
etwa 85 bis etwa 91 Gew.-% Wasser, bezogen auf das Gesamtgewicht der Zusammensetzung.

2. Teststreifen nach Anspruch 1, wobei die Stärke eine Kartoffelstärke, eine Pfeilwurzelstärke, eine Maisstärke oder eine Tapiokastärke mit einem Amylosegehalt von etwa 15 % bis 40 % ist, die etwa 3 % bis etwa 4 % des Gesamtgewichts der Zusammensetzung ausmacht.

3. Teststreifen nach Anspruch 2, wobei die Stärke etwa 3,2 % bis etwa 3,6 % des Gesamtgewichts der Zusammensetzung ausmacht.

4. Teststreifen nach einem der Ansprüche 1 bis 3, wobei die Stärke Kartoffelstärke ist.

5. Teststreifen nach einem der Ansprüche 1 bis 4, wobei das zweibasige Phosphatmittel etwa 0,6 % bis etwa 1 % des Gesamtgewichts der Zusammensetzung ausmacht.

6. Teststreifen nach einem der Ansprüche 1 bis 5, wobei das zweibasische Phosphatmittel zweibasisches Natriumphosphat ist.

7. Teststreifen nach einem der Ansprüche 1 bis 6, wobei das einbasische Phosphatmittel etwa 0,3 % bis etwa 0,5 % des Gesamtgewichts der Zusammensetzung ausmacht.

8. Teststreifen nach einem der Ansprüche 1 bis 7, wobei das einbasische Phosphatmittel einbasisches Kaliumphosphat ist.

9. Teststreifen nach einem der Ansprüche 1 bis 8, wobei das Iodid etwa 0,25 % bis etwa 1,2 % des Gesamtgewichts der Zusammensetzung ausmacht.

10. Teststreifen nach Anspruch 1, wobei das Iodid Kaliumiodid ist.

11. Teststreifen nach einem der Ansprüche 1 bis 10, wobei das Glycerin etwa 7 % bis etwa 7,3 % des Gesamtgewichts der Zusammensetzung ausmacht.

12. Teststreifen nach einem der Ansprüche 1 bis 11, wobei das Mercaptobenzimidsulfonat etwa 0,2 % bis etwa 0,7 % des Gesamtgewichts der Zusammensetzung ausmacht.

13. Teststreifen nach einem der Ansprüche 1 bis 12, wobei das Wasser etwa 86 % bis etwa 91 % des Gesamtgewichts der Zusammensetzung ausmacht.

14. Teststreifen nach einem der Ansprüche 1 bis 13, wobei das Substrat eine Cellulose ist.

15. Teststreifen nach einem der Ansprüche 1 bis 14, wobei die chemische Indikatorzusammensetzung bei einer Mindestkonzentration von weniger als 2000 ppm Peressigsäure kein positives Ergebnis bereitstellt.

## Revendications

1. Bandelette réactive comprenant :
un substrat ; et
une composition indicatrice chimique disposée et séchée sur celle-ci, dans laquelle la composition indicatrice chimique,
avant séchage, comprend :
un amidon ;
un agent phosphate dibasique ;
un agent phosphate monobasique ;
un iodure ;
du glycérol
du mercaptobenzimide sulfonate ; et
environ 85 % à environ 91 % en poids d'eau du pourcentage en poids total de la composition.

2. Bandelette réactive selon la revendication 1, dans laquelle l'amidon est un amidon de pomme de terre, un amidon d'arrowroot, un amidon de maïs ou un amidon de tapioca ayant une teneur en amylose d'environ 15 % à 40 % est présent à raison d'environ 3 % à environ 4 % du pourcentage en poids total de la composition.

3. Bandelette réactive selon la revendication 2, dans laquelle l'amidon est présent à raison d'environ 3,2 % à environ 3,6 % du pourcentage en poids total de la composition.

4. Bandelette réactive selon l'une quelconque des revendications 1 à 3, dans laquelle l'amidon est de l'amidon de pomme de terre.

5. Bandelette réactive selon l'une quelconque des revendications 1 à 4, dans laquelle l'agent phosphate dibasique est présent à raison d'environ 0,6 % à environ 1 % du pourcentage en poids total de la composition.

6. Bandelette réactive selon l'une quelconque des revendications 1 à 5, dans laquelle l'agent phosphate dibasique est le phosphate dibasique de sodium.

7. Bandelette réactive selon l'une quelconque des revendications 1 à 6, dans laquelle l'agent phosphate monobasique est présent à raison d'environ 0,3 % à environ 0,5 % du pourcentage en poids total de la composition.

8. Bandelette réactive selon l'une quelconque des revendications 1 à 7, dans laquelle l'agent phosphate monobasique est le phosphate monobasique de sodium.

9. Bandelette réactive selon l'une quelconque des revendications 1 à 8, dans laquelle l'iodure est présent à raison d'environ 0,25 % à environ 1,2 % du pourcentage en poids total de la composition.

10. Bandelette réactive selon la revendication 1, dans laquelle l'iodure est l'iodure de potassium.

11. Bandelette réactive selon l'une quelconque des revendications 1 à 10, dans laquelle le glycérol est présent à raison d'environ 7 % à environ 7,3 % du pourcentage en poids total de la composition.

12. Bandelette réactive selon l'une quelconque des revendications 1 à 11, dans laquelle le mercapto benzimide sulfonate est présent à raison d'environ 0,2 % à environ 0,7 % du pourcentage en poids total de la composition.

13. Bandelette réactive selon l'une quelconque des revendications 1 à 12, dans laquelle l'eau est présente à raison d'environ 86 % à environ 91 % du pourcentage en poids total de la composition.

14. Bandelette réactive selon l'une quelconque des revendications 1 à 13, dans laquelle le substrat est une cellulose.

15. Bandelette réactive selon l'une quelconque des revendications 1 à 14, dans laquelle la composition indicatrice chimique ne fournit pas de résultat positif avec une concentration minimale inférieure à 2000 ppm d'acide peracétique.
